# FASCICULE DE BREVET EUROPEEN

(11) **EP 3 214 573 B1**
(45) Date de publication et mention de la délivrance du brevet: **05.05.2021**
(21) Numéro de dépôt: 16181368.8
(22) Date de dépôt: 27.07.2016
(51) Int. Cl.: G06K 7/10, G06K 19/07, G06Q 20/34

(54) **CONFIGURATION D'UNE TRANSACTION DANS UN CIRCUIT SANS CONTACT**
KONFIGURATION EINER TRANSAKTION IN EINEM KONTAKTLOSEN SCHALTKREIS
CONFIGURATION OF A TRANSACTION IN A CONTACTLESS CIRCUIT

(30) Priorité: 01.03.2016 FR 1651712
(43) Date de publication de la demande: 06.09.2017
(73) Titulaire: PROTON WORLD INTERNATIONAL N.V., 1831 Diegem (BE)
(72) Inventeur: VAN NIEUWENHUYZE, Olivier, 1970 Wezembeek-Oppem (BE); CUYPERS, Frank, 9000 De Pinte (BE); DUMOULIN, Patrick, 1170 Bruxelles (BE)
(74) Mandataire: Cabinet Beaumont

(56) Documents cités:
- WO-A1-2008/153996
- WO-A1-2012/080048
- US-A1- 2015 324 475

## Description

### Domaine

La présente description concerne de façon générale les circuits électroniques et, plus particulièrement, les circuits de communication sans contact. La présente description vise plus particulièrement la sélection d'un mode de communication entre un terminal de communication sans contact et un circuit de communication sans contact.

### Exposé de l'art antérieur

Le développement des applications utilisables dans des communications sans contact, entre un dispositif de couplage en champ proche (Proximity Coupling Device - PCD), par exemple un terminal sans contact (Contactless Reader), et un circuit intégré sans contact (Proximity Integrated Circuit - PIC) ou une carte à circuit intégré sans contact (Proximity Integrated Circuit Card - PICC), engendre de nouvelles difficultés.

En particulier, les communications répondent à des normes qui évoluent et qui sont susceptibles de poser des problèmes de compatibilité entre différentes générations des dispositifs ou circuits.

Par ailleurs, les circuits intégrés sans contact, qu'ils soient inclus dans une carte à microcircuit, dans un téléphone mobile ou tout autre dispositif portable, sont de plus en plus souvent capables d'héberger plusieurs applications ayant des niveaux de sécurité différents. Par exemple, une carte à microcircuit peut héberger une application bancaire, par exemple selon la norme EMV (Eurocard-Mastercard-Visa), et d'autres applications dites propriétaires, par exemple de contrôle d'accès, de transport, etc.

Ces différentes applications peuvent requérir des protocoles différents. Les systèmes usuels se basent sur une détection, par le lecteur, de la capacité de la carte à communiquer selon une norme ou une autre. Toutefois, cela engendre des faux-rejets, c'est-à-dire qu'une carte qui aurait la capacité de communiquer avec un lecteur est refusée par celui-ci.

Le document WO 2012080048 décrit un procédé de gestion du dialogue entre un équipement et au moins un objet multi-applicatif tel qu'une carte à puce sans contact et objet correspondant.

### Résumé

Il serait souhaitable de disposer d'une solution pour vérifier la compatibilité d'un circuit intégré sans contact à communiquer avec un dispositif de couplage en champ proche.

Il serait souhaitable de disposer d'une solution compatible avec les dispositifs de couplage existants.

Ainsi, un mode de réalisation prévoit un procédé de configuration d'un circuit de communication sans contact selon la revendication 1.

Selon un mode de réalisation, l'émission de deux identifiants se produit jusqu'à ce que le circuit détecte un changement de condition dans l'émission par le dispositif.

Selon un mode de réalisation, la valeur de l'identifiant conditionne le protocole de communication accepté par le circuit.

Selon un mode de réalisation, le circuit communique selon le protocole ISO 14443-4 avec un premier identifiant et ISO 14443-3 avec un deuxième identifiant.

Selon un mode de réalisation, le circuit émet également un code d'identification du circuit.

Selon un mode de réalisation, une première application est une application EMV.

Selon un mode de réalisation, une deuxième application est une application MIFARE Classic ou MIFARE Classic+.

Un mode de réalisation prévoit un circuit de communication sans contact comportant un microprocesseur programmé pour la mise en oeuvre du procédé.

Un mode de réalisation prévoit une carte à microcircuit comportant un circuit programmé pour la mise en oeuvre du procédé.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, un mode de réalisation d'un système de communication en champ proche ;
la figure 2 est un schéma-bloc simplifié d'un exemple usuel de configuration d'un dispositif de couplage en champ proche ;
la figure 3 illustre l'établissement d'une communication en champ proche selon un protocole MIFARE Plus ; et
la figure 4 est un schéma simplifié d'un mode de réalisation d'un procédé de configuration d'un dispositif de couplage en champ proche.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, les échanges entre le dispositif de couplage en champ proche et un circuit intégré sans contact une fois la communication établie n'ont pas été détaillés, les modes de réalisation décrits étant compatibles avec les échanges usuels.

Les modes de réalisation sont décrits en prenant pour exemple une carte sans contact constituant une carte à circuit intégré sans contact (PICC) et un lecteur sans contact constituant un dispositif de couplage en champ proche (PCD). Ils s'appliquent toutefois plus généralement à tout dispositif utilisé en dispositif de couplage en champ proche et à tout circuit intégré de communication sans contact dans lesquels des problèmes similaires se posent. De plus, bien que l'on fasse référence à des applications de paiement, les modes de réalisation décrits se transposent à des applications de nature différente pourvu qu'elles engendrent les mêmes problèmes et soient compatibles avec les solutions décrites.

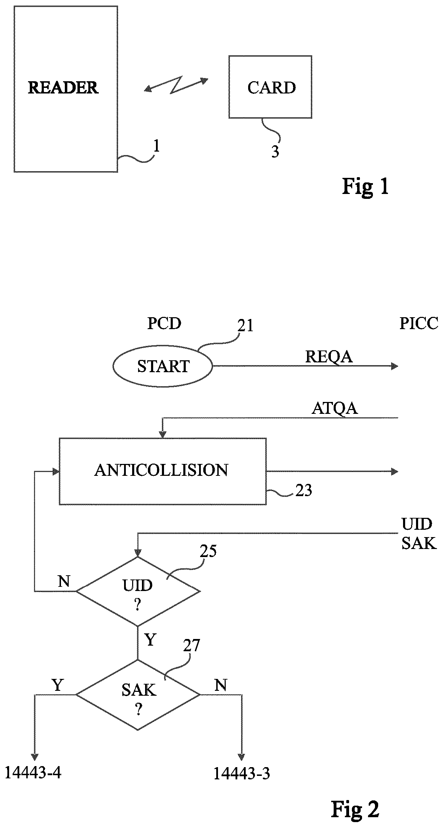

La figure 1 représente, de façon très schématique, un système de communication sans contact du type auquel s'appliquent les modes de réalisation décrits.

Un terminal 1 de communication sans contact ou lecteur sans contact (READER) génère un champ électromagnétique. Une carte 3 (CARD) sans contact se trouvant à portée du lecteur capte ce champ et est alors capable d'échanger des informations avec le lecteur.

Les protocoles de communication sans contact peuvent être "propriétaires", c'est-à-dire, fixés par le fabriquant ou normalisés. En particulier, les cartes bancaires exploitent une technologie, dite EMV, qui utilise des protocoles basés sur la norme ISO 14443-4. Des cartes multi-applications sont cependant susceptibles d'héberger non seulement une application bancaire selon la technologie EMV mais également des applications qui exploitent une technologie connue sous la dénomination MIFARE. La technologie MIFARE utilise, dans certaines réalisations un protocole (applicatif) de communication qui ne supporte pas le protocole ISO 14443-4. L'application qui doit être lancée par la carte dépend du lecteur avec lequel elle communique. En effet, un lecteur est généralement dédié à une application (par exemple, bancaire, de transport, de contrôle d'accès, etc.) et l'activation d'une carte dans le champ du lecteur dépend du protocole que la carte accepte.

La figure 2 est un schéma-bloc illustrant les étapes d'une séquence usuelle d'activation d'une carte dans le champ d'un lecteur.

Le lecteur PCD émet, périodiquement ou lorsqu'il détecte (bloc 21, START) la présence d'une charge dans le champ qu'il génère, une requête (REQA) à destination des cartes potentiellement présentes dans le champ. Si une carte PICC présente dans le champ interprète la requête REQA, elle envoie un message ATQA d'accusé-réception. A réception d'un tel message, le lecteur entame une procédure dite d'anticollision (bloc 23, ANTICOLLISION) pour s'assurer qu'il ne communique qu'avec une seule carte. Cette procédure inclut l'envoi, par la carte, d'un identifiant UID de la carte et d'un code SAK (Select AcKnowledge) identifiant l'application que la carte héberge et avec laquelle elle répond. Le lecteur vérifie si l'identifiant UID est complet (bloc 25, UID ?). Dans la négative (sortie N du bloc 25), la procédure d'anticollision se poursuit jusqu'à réception d'un identifiant complet. Dans l'affirmative (sortie Y du bloc 25), le lecteur lit le code SAK pour déterminer le protocole de communication avec la carte. Typiquement, dans les applications visées par la présente description, le lecteur PCD détermine (bloc 27, SAK ?) si la carte est compatible (sortie Y du bloc 27) avec le protocole 14443-4 ou (sortie N du bloc 27) 14443-3.

Le code SAK ou valeur SAK détermine le protocole de communication accepté par la carte.

L'apparition de cartes multi-applications et notamment hébergeant à la fois une application bancaire de type EMV et une application de type MIFARE Plus engendre des difficultés.

La technologie MIFARE possède différents niveaux de sécurité (Security Level) SL0 à SL3 selon la génération de la carte. Plus particulièrement, une carte MIFARE Classic (mode SL1) ou MIFARE Classic+ (mode SL2) est compatible avec le protocole ISO 14443-3. Une carte MIFARE Plus (SL3) est compatible avec le protocole ISO 14443-4. De plus, les cartes MIFARE Plus évoluées sont rétro compatibles. Ainsi, une carte MIFARE Plus peut également fonctionner sous des niveaux de sécurité inférieurs, afin d'être compatible avec des lecteurs existants. De même, un lecteur hébergeant des applications MIFARE Plus est généralement capable de fonctionner selon les protocoles inférieurs (MIFARE Classic ou Classic+).

Afin de tirer profit des avantages des protocoles plus récents et notamment du protocole MIFARE Plus, un lecteur hébergeant une application MIFARE Plus cherche d'abord à établir une communication selon ce protocole. Ainsi, en présence d'une carte dans son champ, il cherche à établir une communication selon le protocole ISO 14443-4. Si la carte répond, c'est qu'elle est compatible avec la technologie MIFARE Plus et la communication commence. Si la carte ne répond pas, le lecteur bascule sur un protocole de niveau inférieur MIFARE Classic et communique selon la norme 14443-3.

Toutefois, en présence d'une carte hébergeant une application EMV et une application MIFARE Classic, la communication ne peut pas s'établir alors que la carte est compatible avec le lecteur. En effet, lors de l'établissement de la communication, la carte répond qu'elle accepte le protocole 14443-4 dans la mesure où elle héberge une application EMV. Le lecteur entame alors la communication en mode MIFARE Plus. Toutefois, la carte ne répond pas car son application MIFARE n'est pas compatible avec la technologie MIFARE Plus. On est alors dans une situation où une carte, qui aurait pu communiquer avec le lecteur en mode MIFARE Classic (ou Classic+), se trouve empêchée de communiquer car elle héberge une application EMV.

En fait, une carte ne reconnaît pas la nature de la transaction (par exemple EMV ou MIFARE Plus) avant qu'elle ne reçoive des commandes spécifiques liées à l'application. Or, un lecteur MIFARE Plus commence par adapter la transaction vers le protocole le plus performant (MIFARE Plus) avant d'envoyer des commandes spécifiques à l'application. Cela se traduit, pour des cartes hébergeant une application EMV et une application MIFARE mais non compatibles avec MIFARE Plus, à un échec de la transaction alors que le lecteur et la carte sont compatibles avec la technologie MIFARE Classic.

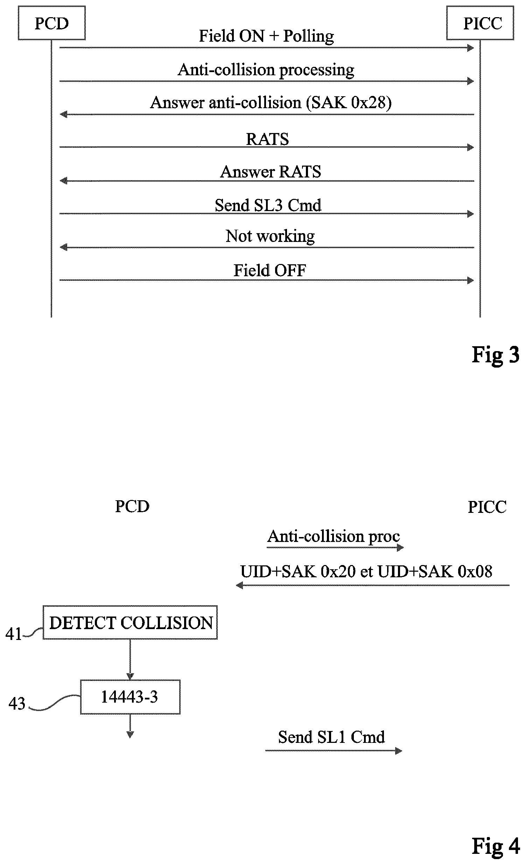

La figure 3 illustre, de façon très schématique, le rejet d'une transaction par un lecteur MIFARE Plus dans une telle situation.

Le lecteur (PCD) allume (FIELD ON) le champ (active la génération du champ) et envoie périodiquement (Polling) une requête (REQA, figure 2). La carte (PICC) répond et un processus d'anticollision (Anticollision processing) débute. Comme la carte est une carte EMV, elle répond (Answer anticollision) avec une valeur SAK compatible avec la norme ISO 14443-4. Pour une carte EMV et MIFARE Classic, la valeur SAK est 0x28. A réception de la réponse, le lecteur envoie une requête normalisée de la norme ISO 14443-4 dite RATS (Request for Answer to Select) permettant de basculer en mode MIFARE Plus si la carte répond ou de rester en mode MIFARE Classic dans le cas contraire. Comme la carte héberge une application EMV, elle répond (Answer RATS) à cette requête de la norme 14443-4. Le lecteur commence alors une transaction MIFARE Plus avec le niveau de sécurité SL3 (Send SL3 Cmd). Toutefois, la carte reste muette (Not working) ou retourne une erreur (par exemple mentionnant une commande inconnue) car son application MIFARE n'est pas compatible avec ce niveau de sécurité. Le lecteur éteint alors le champ (Field OFF).

Alors que les techniques usuelles se basent sur une détection par le lecteur, les inventeurs prévoient de modifier le fonctionnement côté carte afin de résoudre la situation exposée ci-dessus et de permettre à une carte MIFARE de niveau SL1 ou SL2 de communiquer avec un lecteur MIFARE Plus malgré le fait qu'elle héberge une application EMV.

La figure 4 illustre, de façon très schématique, un mode de réalisation d'un procédé de configuration d'une transaction en champ proche.

Selon ce mode de réalisation, lorsque la carte PICC se trouve dans le champ d'un lecteur PCD, elle répond au processus d'anticollision (Anti Collision Proc) en provoquant une collision pour faire croire au lecteur qu'il y a deux cartes, et donc pouvoir émettre deux valeurs SAK. La carte envoie donc (UID+SAK 0x20 et UID+SAK 0x08) son identifiant UID et deux valeurs SAK, à savoir la valeur 0x20 correspondant à la norme 14443-4 et, par exemple, la valeur 0x08 indiquant une communication MIFARE de niveau SL1. Cet envoi provoque une détection de collision par le lecteur (bloc 41, DETECT COLLISION).

On tire alors profit du fait que c'est le lecteur qui initie la transaction et que le lecteur sait quelle est l'application qu'il héberge. En particulier, le lecteur sait si l'application qu'il lance est une application EMV ou une application MIFARE. Ainsi, son processus d'anticollision cherche à éliminer la carte (en fait l'application) qu'il n'héberge pas.

Si, comme dans l'exemple représenté, le lecteur est un lecteur MIFARE, il détecte, par l'identifiant UID et le SAK 0x20, une carte EMV et par le SAK 0x08 une carte MIFARE Classic. Il sélectionne alors (bloc 43, 14443-3) le mode 14443-3 et envoie une commande de niveau de sécurité SL1 (Send SL1 Cmd). Ainsi, même si le lecteur est un lecteur MIFARE Plus, il envoie une commande selon le protocole 14443-3. Si la carte est en face d'un terminal MIFARE Classic, ce dernier émet selon le protocole 14443-3 et la sélection de l'application MIFARE côté carte ne pose pas de problème.

Si le lecteur est un lecteur EMV, il détecte qu'il y a plusieurs cartes dans le champ et se remet en mode d'interrogation (mode "polling"). Il s'agit du processus usuel de réaction d'un lecteur EMV à la présence de deux cartes dans le champ. Par conséquent, cela produit une coupure côté carte. Lorsque le lecteur se remet à émettre, la carte ne provoque plus de collision et envoie l'identifiant UID et la valeur SAK 0x20. Une communication EMV s'établit alors avec le protocole 14443-4. Ainsi, le fonctionnement décrit ci-dessus n'est pas préjudiciable au fonctionnement de la carte avec d'autres lecteurs.

Les valeurs SAK envoyées par la carte dépendent de son niveau de sécurité MIFARE et du type de carte (en particulier de la taille de sa mémoire) . Ainsi, typiquement, une carte EMV et MIFARE Classic prend les valeurs SAK 0x28 pour une carte 2K (2 kilo-octets) et 0x38 pour une carte 4K. Une carte MIFARE Classic seule prend les valeurs 0x08 pour une carte 2K et 0x18 pour une carte 4K. Une carte EMV et MIFARE Classic+ prend les valeurs SAK 0x30 pour une carte 2K et 0x31 pour une carte 4K. Une carte MIFARE Classic+ seule prend les valeurs SAK 0x10 pour une carte 2K et 0x11 pour une carte 4K. Une carte uniquement EMV (monoapplication) a une valeur SAK de 0x20.

Pour la mise en oeuvre du mode de réalisation décrit ci-dessus, la carte est programmée pour ne pas envoyer une valeur SAK unique représentative de sa caractéristique multi-application, mais, en cas de changement par rapport à la requête d'anticollision précédente, répond comme s'il s'agissait de deux cartes différentes.

Selon une variante de réalisation du mode ci-dessus, dans le cas où la carte détecte une commande de niveau SL3, elle ne répond, lors de l'anticollision suivante, qu'avec la valeur SAK 0x08 afin de s'identifier comme une carte MIFARE Classic et non comme une carte MIFARE Plus.

Le mode de réalisation décrit ci-dessus est mis en oeuvre côté carte et est transparent pour le lecteur (ne demande aucune modification côté lecteur). Les cartes ainsi réalisées (programmées) sont donc compatibles avec les lecteurs existants.

Divers modes de réalisation ont été décrits. Diverses variantes et modifications apparaîtront à l'homme de l'art. En particulier, bien que les modes de réalisation aient été décrits en relation avec une carte à microcircuit, ils sont compatibles avec une réalisation dans tout dispositif de communication en champ proche dans lequel des problèmes similaires se posent, par exemple un téléphone mobile équipé d'un routeur NFC opérant en mode carte. Par ailleurs, bien que les modes de réalisation aient été plus particulièrement décrits en relation avec un exemple d'application à des transactions bancaires EMV et MIFARE, ils se transposent à d'autres applications dans lesquelles des problèmes similaires se posent. En outre, la mise en oeuvre pratique des modes de réalisation qui ont été décrits est à la portée de l'homme du métier à partir des indications fonctionnelles données ci-dessus et en utilisant ou programmant des circuits en eux-mêmes usuels. En particulier, un circuit intégré de communication sans contact auquel s'appliquent ces modes de réalisation comporte généralement au moins un microprocesseur, une ou plusieurs unités de mémoire volatile et non volatile, une interface de communication en champ proche et, souvent, d'autres circuits en fonction des applications hébergées.

## Revendications

1. Procédé de configuration d'un circuit de communication sans contact hébergeant au moins deux applications compatibles avec des protocoles de communication différents, dans lequel :
en réponse à un premier processus d'anticollision initié par un dispositif de couplage en champ proche, le circuit émet deux identifiants (SAK) des protocoles de communication afin de provoquer une collision côté dispositif de couplage en champ proche,
le procédé de configuration étant **caractérisé en ce que** la détection de la collision par le dispositif de couplage provoquant une remise en mode interrogation du dispositif et une coupure du champ côté circuit, suivi d'une deuxième procédure d'anticollision initié par le dispositif ; et
en réponse au deuxième processus d'anticollision suivant le premier, le circuit émet un seul identifiant (SAK) de protocole de communication, choisi en fonction du protocole utilisé par le premier processus.

2. Procédé selon la revendication 1, dans lequel l'émission de deux identifiants se produit jusqu'à ce que le circuit détecte un changement de condition dans l'émission par le dispositif.

3. Procédé selon la revendication 1 ou 2, dans lequel la valeur de l'identifiant conditionne le protocole de communication accepté par le circuit.

4. Procédé selon la revendication 3, dans lequel le circuit communique selon le protocole ISO 14443-4 avec un premier identifiant et ISO 14443-3 avec un deuxième identifiant.

5. Procédé selon l'une quelconque des revendications 1 à 4, dans lequel le circuit émet également un code d'identification du circuit.

6. Procédé selon l'une quelconque des revendications 1 à 5, dans lequel une première application est une application EMV.

7. Procédé selon l'une quelconque des revendications 1 à 6, dans lequel une deuxième application est une application MIFARE Classic ou MIFARE Classic+.

8. Circuit de communication sans contact comportant un microprocesseur programmé pour la mise en oeuvre du procédé selon l'une quelconque des revendications précédentes.

9. Carte à microcircuit comportant un circuit programmé pour la mise en oeuvre du procédé selon l'une quelconque des revendications 1 à 8.

## Patentansprüche

1. Verfahren zum Konfigurieren einer kontaktlosen Kommunikationsschaltung, die mindestens zwei mit unterschiedlichen Kommunikationsprotokollen kompatible Anwendungen aufnimmt oder hostet, wobei:
die Schaltung als Reaktion auf einen ersten Antikollisionsprozess, der von einer Annäherungskopplungsvorrichtung initiiert wird, zwei Identifikatoren (SAK) der Kommunikationsprotokolle sendet, um eine Kollision auf der Seite der Annäherungskopplungsvorrichtung zu verursachen,
wobei das Konfigurierungsverfahren **dadurch gekennzeichnet ist, dass**
die Erkennung der Kollision durch die Kopplungsvorrichtung eine Rückkehr in den Abfragemodus der Vorrichtung und eine Unterbrechung des Feldes auf der Seite der Schaltung bewirkt, gefolgt von einem zweiten Antikollisionsprozess, der von der Vorrichtung initiiert wird; und
als Antwort auf den zweiten Antikollisionsprozess, der auf den ersten folgt, die Schaltung eine einzelne Kommunikationsprotokollkennung (SAK) sendet, die entsprechend dem vom ersten Prozess verwendeten Protokoll ausgewählt wird.

2. Verfahren nach Anspruch 1, wobei die Übertragung von zwei Identifikatoren erfolgt, bis die Schaltung eine Zustandsänderung bei der Übertragung durch das Gerät erkennt.

3. Verfahren nach Anspruch 1 oder 2, wobei der Wert der Kennung das von der Schaltung akzeptierte Kommunikationsprotokoll bedingt.

4. Verfahren nach Anspruch 3, wobei die Schaltung nach dem Protokoll ISO 14443-4 mit einer ersten Kennung und nach dem Protokoll ISO 14443-3 mit einer zweiten Kennung kommuniziert.

5. Verfahren nach einem der Ansprüche 1 bis 4, wobei die Schaltung auch einen Schaltungsidentifikationscode überträgt.

6. Verfahren nach einem der Ansprüche 1 bis 5, wobei eine erste Anwendung eine EMV-Anwendung ist.

7. Verfahren nach einem der Ansprüche 1 bis 6, wobei eine zweite Anwendung eine MIFARE Classic oder MIFARE Classic+ Anwendung ist.

8. Kontaktlose Kommunikationsschaltung mit einem Mikroprozessor, der so programmiert ist, dass er das Verfahren nach einem der vorangehenden Ansprüche implementiert.

9. Eine Mikroschaltungskarte, die eine Schaltung aufweist, die programmiert ist, um das Verfahren nach einem der Ansprüche 1 bis 8 zu implementieren.

## Claims

1. A method of configuring a contactless communication circuit hosting at least two applications compatible with different communication protocols, wherein:
as a response to a first anticollision process initiated by a proximity coupling device, the circuit transmits two identifiers (SAK) of the communication protocols to cause a collision on the side of the proximity coupling device,
the configuring method being **characterized in that**:
the detection of the collision by the coupling device causes a return in the interrogating mode of the device and an interruption of the field on the circuit side, followed by a second anticollision process initiated by the device; and
as a response to the second anticollision process following the first one, the circuit transmits a single communication protocol identifier (SAK), selected according to the protocol used by the first process.

2. The method of claim 12, wherein the transmission of two identifiers occurs until the circuit detects a condition change in the transmission by the device.

3. The method of claim 1 or 2, wherein the value of the identifier conditions the communication protocol accepted by the circuit.

4. The method of claim 3, wherein the circuit communicates according to the ISO 14443-4 protocol with a first identifier and according to the ISO 14443-3 protocol with a second identifier.

5. The method of any of claims 1 to 4, wherein the circuit also transmits a circuit identification code.

6. The method of any of claims 1 to 5, wherein a first application is an EMV application.

7. The method of any of claims 1 to 6, wherein a second application is a MIFARE Classic or MIFARE Classic+ application.

8. A contactless communication circuit comprising a microprocessor programmed to implement the method of any of the foregoing claims.

9. A microcircuit card comprising a circuit programmed to implement the method of any of claims 1 to 8.
